# EUROPÄISCHE PATENTANMELDUNG

(11) **EP 1 233 161 A2**
(43) Veröffentlichungstag der Anmeldung: **21.08.2002**
(21) Anmeldenummer: 01128954.3
(22) Anmeldetag: 06.12.2001
(51) Int. Cl.: F02B 27/02

(54) **Ansaugvorrichtung für eine Brennkraftmaschine und Verfahren zu deren Betrieb**

(30) Priorität: 13.02.2001 DE 10106515
(71) Anmelder: FILTERWERK MANN+HUMMEL GMBH, 71638 Ludwigsburg (DE)
(72) Erfinder: Pietrowski, Herbert, Pleidelsheim (DE); Wild, Stephan, Dr., 75305 Neuenbürg (DE); Teschner, Matthias, Dr., 71636 Ludwigsburg (DE); Linhart, Jochen, 71332 Waiblingen (DE)
(74) Vertreter: Voth, Gerhard, Dipl.-Ing.

(57) **Zusammenfassung**

Ansaugvorrichtung für eine Brennkraftmaschine, enthaltend insbesondere einen Leistungskanal (14) und einen Drehmomentkanal (17) für die Ansaugung von Verbrennungsluft, die von einem Sammelraum (12) abgehen. Der Leistungskanal (14) lässt sich in bekannter Weise durch einen Drehschieber (13) verschließen. Vorteilhafterweise ist jedoch auch im Drehmomentkanal (17) ein Magnetventil (18) zum schnellen Öffnen und Schließen desselben angeordnet. Dieses lässt sich vorteilhaft dazu verwenden, in der sogenannten Leistungsstellung den Drehmomentkanal vollständig zu verschließen, wodurch eine Überlagerung von Strömungseffekten zwischen beiden Kanälen wirkungsvoll verhindert werden kann. Hierdurch lässt sich die Leistung der Brennkraftmaschine in der sogenannten Leistungsstellung der beiden Ventile steigern. Gleichzeitig kann das Magnetventil (18) in an sich bekannter Weise als Lufttaktventil verwendet werden.

## Beschreibung

### Stand der Technik

Die Erfindung betrifft eine Ansaugvorrichtung für eine Brennkraftmaschine, wobei pro Zylinder zwei Saugkanäle vorgesehen sind und der eine Saugkanal durch ein Verschlussorgan verschließbar ist, nach der Gattung des Patentanspruches 1. Außerdem betrifft die Erfindung verschiedene Verfahren zum Betrieb dieser Ansaugvorrichtung nach den Patentansprüchen 8 bis 10.

Ansaugvorrichtungen der eingangs genannten Art sind bekannt. Beispielsweise ist in der DE 43 44 504 A1 ein sogenanntes Schaltsaugrohr offenbart, welches mit jeweils langen und kurzen Saugkanälen pro Zylinder ausgestattet ist. Die kurzen Kanäle werden als Leistungskanäle bezeichnet und sind im Normalbetrieb der Brennkraftmaschine durch eine gemeinsame Schaltwalze verschlossen. Oberhalb einer gewissen Drehzahl wird die Schaltwalze geöffnet, so dass die Luft nicht über die langen sondern über die kurzen Saugkanäle geleitet wird. Dadurch verbessert sich das Ladungsverhalten für die Ansaugluft der Brennkraftmaschine. In geringeren Drehzahlbereichen der Brennkraftmaschine werden die längeren, als Drehmomentkanäle bezeichneten Saugkanäle durchflutet, welche aufgrund von Rohrresonanzen ebenfalls zu einer verbesserten Aufladung der Brennkraftmaschine mit Ansaugluft führen.

In der sogenannten Leistungsschaltung ist jedoch das Ansaugverhalten für die Ansaugluft im Saugrohr weiterhin in einem gewissen Maße durch die langen Ansaugkanäle beeinflusst. Daher ergibt sich eine gewisse Überlagerung von schwer vorhersagbaren Rohrresonanzen, welche zu einer Verfälschung des Ergebnisses führt.

Aufgabe der Erfindung ist es daher, eine Ansaugvorrichtung für eine Brennkraftmaschine zu schaffen, die mehrere Ansaugkanäle pro Zylinder aufweist und hinsichtlich des Ansaugverhaltens optimal auf den aktuellen Betriebszustand der Brennkraftmaschine angepasst werden kann. Diese Aufgabe wird durch die Merkmale des Patentanspruches 1 gelöst. Weiterhin sind verschiedene Verfahren zum Betrieb dieser Ansaugvorrichtung unter Schutz gestellt.

### Vorteile der Erfindung

Die erfindungsgemäße Ansaugvorrichtung weist in bekannter Weise pro Zylinder zwei Saugkanäle auf. Mit Ansaugvorrichtung ist im weiteren Sinne eine Kanalstruktur gemeint, die die Ansaugung der Verbrennungsluft zu den Zylindern ermöglicht. Diese kann durch verschiedene Funktionskomponenten gebildet werden. In den jeweils ersten Saugkanälen zu den Zylindern ist ein Verschlussorgan angeordnet. Die Erfindung ist dadurch gekennzeichnet, dass in den jeweiligen zweiten Saugkanälen ein zweites Verschlussorgan angeordnet ist, wodurch diese ebenfalls verschließbar sind. Dies hat den ernormen Vorteil, dass durch ein geeignetes Zusammenspiel der jeweiligen Verschlussorgane pro Zylinder immer die hinsichtlich der Aufladung der Zylinder mit Verbrennungsluft optimale Schaltung herbeigeführt werden kann. Hierbei können unterschiedliche Betriebsparameter der Brennkraftmaschine beachtet werden, insbesondere jedoch die augenblickliche Drehzahl des Motors. Diese ist für die Ausbildung von Luftschwingungen in den Saugkanälen von vorrangiger Bedeutung, so dass der Effekt der sogenannten Schwingrohraufladung der Zylinder durch eine entsprechende Schaltung der Verschlussorgane genutzt werden kann. Eine weitere Möglichkeit besteht in der getakteten Schaltung der Verschlussorgane. Dies ist insbesondere für die zweiten Verschlussorgane in den zweiten Saugkanälen von Bedeutung. Die Taktung erfolgt im Zusammenspiel mit den Einlassventilen der Zylinder, so dass in den Saugkanälen ein gezielter Überdruck aufgebaut werden kann, der zu einer besseren Befüllung der Zylinder führt.

Um die beschriebenen Effekte zu nutzen, können unterschiedliche Verfahren zum Betrieb der Brennkraftmaschine angewendet werden. Auf diese wird noch genauer eingegangen werden.

Eine vorteilhafte Ausgestaltung der Erfindung sieht vor, dass die jeweiligen zweiten Saugkanäle länger ausgebildet sind als die jeweiligen ersten Saugkanäle. Hierdurch lässt sich durch die zweiten Saugkanäle der Effekt der bereits beschriebenen Schwingrohraufladung besonders effektiv nutzen. Die Länge dieser Saugkanäle ist notwendig, weil die Schwingrohraufladung bei geringeren Drehzahlen der Brennkraftmaschine genutzt werden soll, wobei die geringeren Drehzahlen tiefere Resonanzfrequenzen bewirken, die nur bei einer gewissen Länge der Saugkanäle erzeugt werden können.

Eine weitere Ausgestaltung der Erfindung sieht vorteilhaft vor, dass die jeweiligen ersten Saugkanäle einen größeren Querschnitt aufweisen als die jeweiligen zweiten. Die ersten Saugkanäle sollen demnach keine Effekte der Schwingrohraufladung nutzen. Die sogenannte Leistungsschaltung, die mit diesen kurzen Kanälen erzeugt werden kann, soll der strömenden Ansaugluft einen möglichst geringen Widerstand entgegensetzen. Dieser kann verringert werden, wenn die Kanäle möglichst kurz und mit großem Querschnitt ausgeführt sind.

Es ist weiterhin vorteilhaft, verschiedene Funktionskomponenten in einem Saugrohr zusammenzuführen. Dieses weist demnach den Sammelraum und die ersten und zweiten Saugkanäle auf. Weiterhin können die diversen Verschlussorgane in dem Saugrohr angeordnet werden. Es ergibt sich eine Baugruppe, die hervorragend vormontiert werden kann. Dadurch lassen sich Einsparungen im kostensensiblen Bereich der Endmontage der Brennkraftmaschine erzielen.

Eine andere vorteilhafte Möglichkeit besteht darin, dass das zweite Verschlussorgan in den Zylinderkopf der Brennkraftmaschine integriert wird. Dieses kann insbesondere als Magnetventil ausgebildet sein und weist insoweit eine gewisse Verwandtschaft zu dem Einlassventil am Zylinder auf. An Stelle eines Magnetventiles kann z. B. auch ein piezoelektrisches Ventil Verwendung finden.

Für das erste Verschlussorgan wird gemäß einer vorteilhaften Ausgestaltung der Erfindung ein Drehschieber verwendet. Dieser kann auch als Schaltwalze ausgeführt sein, welche gleichzeitig alle oder einen Teil der ersten Saugkanäle verschließt und öffnet.

Ein Verfahren zum Betreiben der erfindungsgemäßen Ansaugvorrichtung sieht vor, dass das erste Verschlussorgan geschlossen ist und das zweite Verschlussorgan gemeinsam mit dem zugehörigen Einlassventil getaktet betrieben wird. Hierdurch kann in den Bereichen, in denen der Leistungskanal verschlossen werden soll, durch entsprechende Schaltung der genannten Ventile eine optimale Füllung des jeweiligen Zylinders mit Ansaugluft erreicht werden. Hierbei können Steuerverfahren verwendet werden, wie sie aus dem Stand der Technik, z. B. gemäß DE 19754287 A1 bereits bekannt sind. Die ersten Ventile arbeiten dabei nach dem Prinzip sogenannter Lufttaktventile.

Eine alternative Betriebsweise der erfindungsgemäßen Ansaugvorrichtung ist für andere Betriebszustände der Brennkraftmaschine geeignet. Diese setzt voraus, dass der zweite Saugkanal als Schwingrohr ausgebildet ist. Dieser wird bei Überschreiten einer bestimmten Drehzahl, bei der der Effekt der Schwingrohraufladung auf Grund der geometrischen Verhältnisse des Saugrohres nicht mehr befriedigend genutzt werden kann, verschlossen. An Stelle dessen wird der Leistungskanal geöffnet, so dass die Luft nur durch diesen strömen kann. Eine Überlagerung von Schwingungen aus dem jeweiligen zweiten Kanal kann somit vollständig ausgeschlossen werden. Die Luftströmung kann ungestört über den Leistungskanal fließen, dessen Querschnitt entsprechend ausgelegt sein muss. Hierdurch lässt sich der Betrieb der Brennkraftmaschine in der sogenannten Leistungsschaltung optimieren.

Eine Abwandlung des beschriebenen Verfahrens lässt sich dadurch erreichen, dass das erste und zweite Verschlussorgan gleichzeitig geöffnet wird. In diesem Fall lässt sich der zur Ansaugung der Verbrennungsluft zur Verfügung stehende Ansaugquerschnitt noch erweitern. Dies kann als Ergänzung der bereits beschriebenen Leistungsschaltung verstanden werden, wodurch wieder Strömungsbedingungen hergestellt werden, die dem Saugrohr entsprechend der DE 43 44 504 A1 in der Leistungsschaltung entsprechen.

Damit wird deutlich, dass durch ein geeignetes Zusammenspiel der ersten und zweiten Verschlussorgane für jeden Betriebszustand eine optimale Schaltung gefunden werden kann, wobei nicht ausgeschlossen ist, dass bei bestimmten Betriebsbedingungen der Brennkraftmaschine Schaltzustände verwendet werden, die an sich aus dem Stand der Technik bereits bekannt sind. Die erfindungsgemäße Ansaugvorrichtung gewährleistet jedoch eine Kombination dieser bekannten Schaltzustände, so dass in jedem Betriebszustand der Brennkraftmaschine optimale Bedingungen hergestellt werden können. Gleichzeitig ermöglicht die erfindungsgemäße Ansaugvorrichtung auch Schaltzustände, die bei bekannten Saugrohrgestaltungen bisher nicht möglich waren.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: ein Saugrohr mit Verschlussorgan im Leistungs- sowie Drehmomentkanal im schematischen Querschnitt,
- Figur 2: das Saugrohr gemäß Figur 1 in einem anderen Schaltzustand,
- Figur 3: schematisch die Integration des zweiten Ventils in den Zylinderkopf im Schnitt und
- Figur 4: an sich bekannte Schaltmöglichkeiten für ein Lufttaktventil.

### Beschreibung der Ausführungsbeispiele

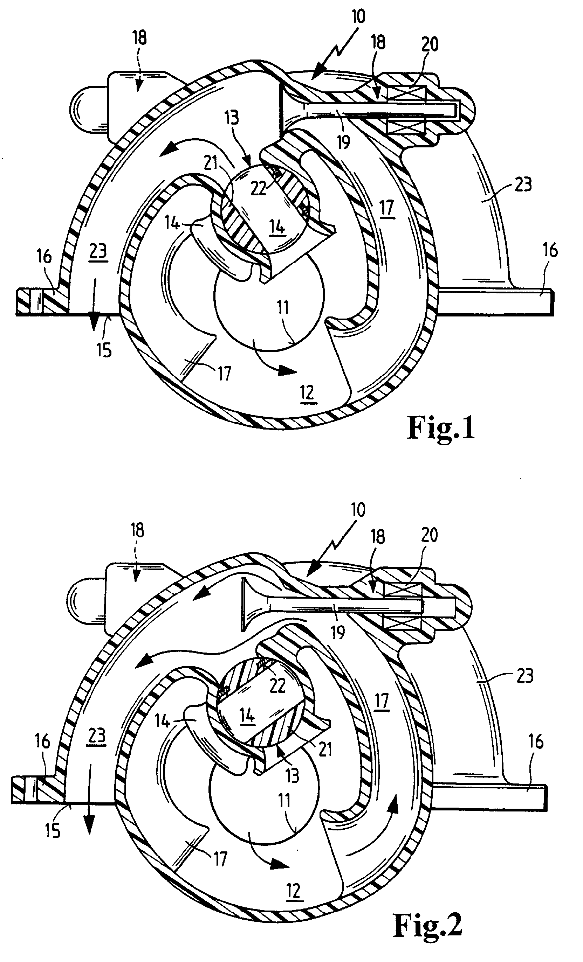

Der Figur 1 lässt sich ein Saugrohr 10 für eine nicht dargestellte Brennkraftmaschine mit V-förmiger Anordnung der Zylinder entnehmen. Entsprechend der angedeuteten Pfeile tritt die Verbrennungsluft durch einen Einlass 11 in einen Sammelraum 12 des Saugrohrs ein und passiert bei einem geöffneten Drehschieber 13 einen ersten Saugkanal 14 und gelangt so zu einem zylinderseitigen Austritt 15, der in einen Zylinderkopfflansch 16 zur Montage des Saugrohrs an der nicht dargestellten Brennkraftmaschine integriert ist.

Weiterhin ist ein zweiter Saugkanal 17 im Sammelraum 12 angeordnet, welcher durch ein Magnetventil 18, angedeutet durch einen Ventilstößel 19 und eine Magnetspule 20, verschlossen ist. Der zweite Saugkanal ist länger ausgebildet und weist einen geringeren Querschnitt auf als der erste Saugkanal. Damit wirkt der erste Saugkanal als Leistungskanal und der zweite Saugkanal als Drehmomentkanal. In dem in Figur 1 dargestellten Betriebszustand ist der Leistungskanal geöffnet. Dieser Betriebszustand ist für hohe Drehzahlen der Brennkraftmaschine bzw. einen erhöhten Luftbedarf der Brennkraftmaschine vorgesehen. Durch den kurzen Weg des Saugkanals werden die Luftwiderstände gering gehalten, der große Querschnitt des Leistungskanals führt auch bei erhöhtem Luftbedarf zu einem geringen Druckverlust. Abweichend von der in Figur 1 dargestellten Ventilstellung kann das Magnetventil 18 ebenfalls geöffnet werden. Auf diese Weise lässt sich der Strömungswiderstand für die angesaugte Luft weiter verringern. Die dargestellte geschlossene Stellung hat jedoch den Vorteil einer besonders ungestörten Luftströmung durch den ersten Saugkanal 14, da Einflüsse des zweiten Saugkanals ausgeschlossen werden können.

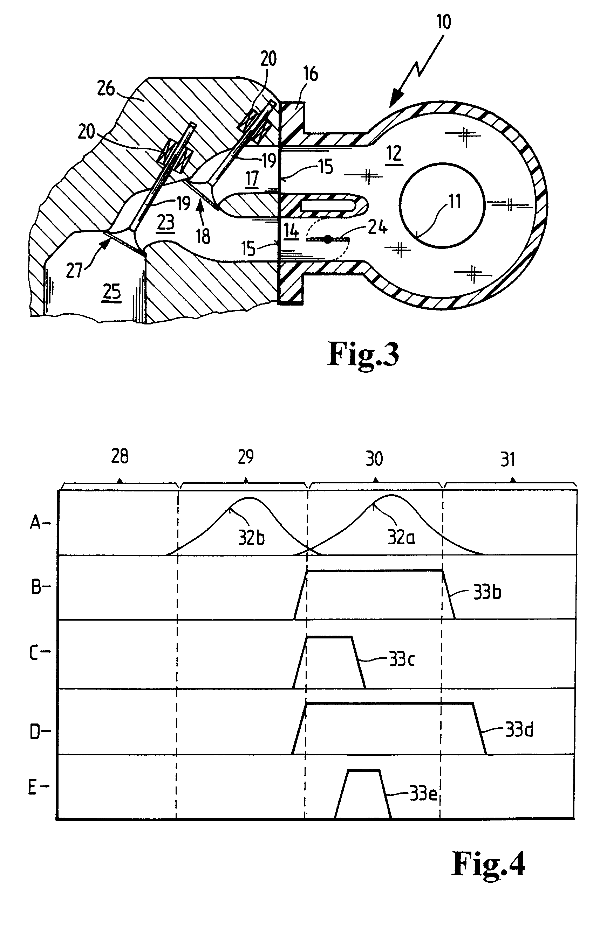

In Figur 2 ist ein anderer Betriebszustand des Saugrohres dargestellt, wie er bevorzugt für geringe Drehzahlen zum Einsatz kommt. Hierbei ist das Magnetventil 18 geöffnet und der Drehschieber 14 geschlossen. Der Drehschieber 13 besteht aus einem Walzenkörper 21, der formschlüssig in den ersten Saugkanal 14 eingepasst ist. Eine Formdichtung 22 aus Kunststoff sorgt für einen dichten Verschluss des ersten Saugkanals 14. Das Magnetventil funktioniert entsprechend eines Einlassventils am Zylinder der Brennkraftmaschine (nicht dargestellt). Im geöffneten Zustand ist der Ventilstößel 19 durch die Ansaugluft umflutet. Durch die Verwendung des Magnetventils können außerordentlich kurze Schaltzeiten realisiert werden. Dies ermöglicht im gemäß Figur 2 dargestellten Betriebszustand die Verwendung des Magnetventils 18 als Lufttaktventil (vergl. auch Ausführungen zu Figur 4).

Das Saugrohr gemäß Figur 1 und 2 ist in einer Ebene geschnitten dargestellt, in der der Sammelraum 12 und die sich schneckenförmig um den Sammelraum windenden Saugkanäle 14, 17 zu erkennen sind, die zu einer der Zylinderbänke der Brennkraftmaschine (nicht dargestellt) führen. Hinter der Zeichenebene sind im Sammelraum weitere Saugkanäle 14, 17 zu erkennen, welche zur anderen Zylinderbank der Brennkraftmaschine führen. Weiterhin sind gemeinsame Abschnitte 23 der Saugkanäle zu erkennen, in die jeweils sowohl die ersten Saugkanäle 14 als auch die zweiten Saugkanäle 17 münden.

In Figur 3 ist schematisch ein Saugrohr 10 dargestellt, welches parallel verlaufende erste und zweite Saugkanäle 14, 17 aufweist. Diese Anordnung wird bevorzugt verwendet, um eine selektive Kanalabschaltung mit Hilfe einer Schaltklappe 24 zu erreichen. Die Schaltklappe 24 kann auch zur Erzeugung eines gezielten Dralls der Ansaugluft verwendet werden, welche zu einer besseren Befüllung eines Zylinders 25 führt.

Das Saugrohr 10 ist mit Hilfe des Zylinderkopfflansches 16 an einen schematisch dargestellten Zylinderkopf 26 der Brennkraftmaschine angeflanscht. Im Zylinderkopf befindet sich gleichzeitig das bereits erwähnte Magnetventil 18 zum Verschluss des zweiten Saugkanals 17. Es wird hierbei deutlich, dass die Saugkanäle im Rahmen der im Zusammenhang mit dieser Anmeldung verwendeten Terminologie sowohl durch das Saugrohr 10 wie auch durch den Zylinderkopf 26 gebildet werden können.

Bei geschlossener Schaltklappe 24 kann das Ventil 18 als Lufttaktventil verwendet werden. Weiterhin lässt sich mit Hilfe des Ventils wahlweise einer der beiden Saugkanäle 14, 17 selektiv abschalten. Hierbei kann jeweils der Kanal gewählt werden, welcher im aktuellen Zustand der Brennkraftmaschine zu günstigeren Strömungsverhältnissen und einer besseren Kraftstoffverteilung führt. Beide Saugkanäle 14, 17 führen über den gemeinsamen Abschnitt 23 zu einem Einlassventil 27, welches entsprechend dem Magnetventil 18 konstruktiv ausgebildet ist.

In Figur 4 sind an sich bekannte Möglichkeiten der Schaltung des Magnetventils 18 als Lufttaktventil dargestellt. Die Spalten stellen die Takte der Viertaktbrennkraftmaschine, d. h. Expansion 28, Ausschiebung 29, Ansaugung 30 und Kompression 31 dar. In Zeile A ist der Ventilhub (Öffnung) 32a des Einlassventils und der Ventilhub 32b des Auslassventils dargestellt.

Die Zeilen B bis E zeigen mögliche Öffnung des Magnetventils 18, wobei eine möglichst schnelle Schaltung erzielt werden soll und die dargestellten Rampen sich durch die Schaltzeit des Magnetventils ergeben. Zeile B zeigt die Ventilbetätigung 33b bei Volllast der Brennkraftmaschine. Hier ist eine Überschneidung mit dem Ventilhub des Einlassventils 32a gewünscht. Dieser Betriebszustand kann jedoch vollständig durch Öffnung des ersten Kanals in dem Saugrohr gemäß Figur 1 und 2 ersetzt werden, da die Erreichung eines optimalen Ansaugergebnisses in diesem Ausführungsbeispiel durch den beschriebenen Leistungskanal erreicht wird. Die Ventilbetätigung 33c ist für einen Betrieb der Brennkraftmaschine im Teillastbereich vorgesehen und wird als frühes Einlassschließen (FES) bezeichnet. Diese Betriebsart kann als Ergänzung zur Erreichung eines optimalen Ansaugergebnisses bei den beschriebenen Ausführungsbeispielen gesehen werden. In Zeile D ist die Ventilbetätigung 33d dargestellt, welche als spätes Einlassschließen (SES) bezeichnet wird. Schließlich stellt Zeile E mit der Ventilbetätigung 33e die Möglichkeit des späten Einlassöffnens (SEÖ) und frühen Einlassschließens (FES) dar. Die genauen Schaltpunkte in den jeweiligen Betriebszuständen der Brennkraftmaschine sind von den Gegebenheiten des Ansaugweges und der Brennkraftmaschine abhängig und müssen im Einzelfall durch geeignete Versuche ermittelt werden. Durch Kombination der beschriebenen Maßnahmen lässt sich in allen Betriebszuständen der Brennkraftmaschine ein optimales Befüllungsverhalten für die Brennkraftmaschine einstellen. Dadurch kann der zur Verfügung stehende Brennraum optimal genutzt werden, wobei gleichzeitig die Emissionswerte der Brennkraftmaschine verbessert werden können.

## Patentansprüche

1. Ansaugvorrichtung für eine Brennkraftmaschine mit mindestens einem Zylinder (25), aufweisend
- für jeden Zylinder einen ersten Saugkanal (14), der von einem Sammelraum (12) für die Ansaugluft zu dem Zylinder führt und mit einem ersten Verschlussorgan (13, 24) verschließbar ist und
- für jeden Zylinder einen zweiten Saugkanal (17), der von dem Sammelraum (12) für die Ansaugluft zu dem Zylinder führt,
**dadurch gekennzeichnet, dass** der jeweilige zweite Saugkanal (17) durch ein zweites Verschlussorgan (18) verschließbar ist.

2. Ansaugvorrichtung nach Anspruch 1, **dadurch gekennzeichnet, dass** der jeweilige zweite Saugkanal (17) länger ausgebildet ist, als der jeweilige erste Saugkanal (14)

3. Ansaugvorrichtung nach Anspruch 2, **dadurch gekennzeichnet, dass** der jeweilige erste Saugkanal (14) einen größeren Querschnitt aufweist, als der jeweilige zweite Saugkanal.

4. Ansaugvorrichtung nach einem der vorherigen Ansprüche, **dadurch gekennzeichnet, dass** diese teilweise durch ein Saugrohr gebildet ist, welches den Sammelraum (12), den jeweiligen ersten (14) und zweiten (17) Saugkanal bis zur Anschlussstelle an einen Zylinderkopf (26) der Brennkraftmaschine sowie das jeweilige erste (18) und zweite Verschlussorgan in einer Baugruppe vereinigt.

5. Ansaugvorrichtung nach einem der Ansprüche 1 bis 3, **dadurch gekennzeichnet, dass** das jeweilige zweite Verschlussorgan (18) in einen Zylinderkopf (26) der Brennkraftmaschine integriert ist.

6. Ansaugvorrichtung nach einem der vorherigen Ansprüche, **dadurch gekennzeichnet, dass** das jeweilige erste Verschlussorgan durch einen Drehschieber (13) gebildet ist.

7. Ansaugvorrichtung nach einem der vorherigen Ansprüche, **dadurch gekennzeichnet, dass** das jeweilige zweite Verschlussorgan durch ein Magnetventil gebildet ist.

8. Verfahren zum Betreiben einer Ansaugvorrichtung nach einem der vorherigen Ansprüche, **dadurch gekennzeichnet, dass** das erste Verschlussorgan (13, 24) geschlossen ist und das zweite Verschlussorgan (18) mit einem Einlassventil (27) am jeweiligen Zylinder der Brennkraftmaschine derart getaktet geöffnet und geschlossen wird, das für den aktuellen Betriebszustand der Brennkraftmaschine eine optimale Befüllung des jeweiligen Zylinders mit Ansaugluft erreicht wird.

9. Verfahren zum Betreiben einer Ansaugvorrichtung nach einem der Ansprüche 2 bis 7, **dadurch gekennzeichnet, dass** das erste Verschlussorgan (13, 24) geöffnet ist und das zweite Verschlussorgan (18) geschlossen ist, sobald eine bestimmte Drehzahl der Brennkraftmaschine überschritten wird.

10. Verfahren zum Betreiben einer Ansaugvorrichtung nach einem der Ansprüche 1 bis 7, **dadurch gekennzeichnet, dass** das erste (13, 24) und das zweite (18) Verschlussorgan gleichzeitig geöffnet werden.
